(19) Europäisches Patentamt
European Patent Office
Office européen des brevets

(11) **EP 2 416 235 A1**

(12) **EUROPEAN PATENT APPLICATION**
published in accordance with Art. 153(4) EPC

(43) Date of publication:
**08.02.2012 Bulletin 2012/06**

(51) Int Cl.:
***G06F 3/06*** (2006.01)

(21) Application number: **10758271.0**

(22) Date of filing: **31.03.2010**

(86) International application number:
**PCT/JP2010/002344**

(87) International publication number:
**WO 2010/113491 (07.10.2010 Gazette 2010/40)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009083823**

(71) Applicant: **Panasonic Corporation
Kadoma-shi
Osaka 571-8501 (JP)**

(72) Inventor: **YAMASHITA, Akiyoshi
Osaka 540-6207 (JP)**

(74) Representative: **Grünecker, Kinkeldey,
Stockmair & Schwanhäusser
Anwaltssozietät
Leopoldstrasse 4
80802 München (DE)**

(54) **DATA TRANSFERRING METHOD**

(57) A first device (1) includes a first interface (4) which transmits and receives, to and from a rotating recording medium, data in data blocks in a size equal to the integral multiple of the sector size of the recording medium, and transmits and receives, to and from a second device (2), in packets, the data transferred from or to the recording medium. The second device (2) includes a second interface (5) which is connected to the first interface (4) and transmits and receives data in packets to and from the first device (1). In transferring data between the first device (1) and the second device (2), data is transferred in the integral ratio of sectors to packets set such that the number of packets is smaller than the number of packets required for data transfer for one sector.

FIG. 1

**Description**

Technical Field

The present invention relates to a data transferring method in which data is transferred in data blocks using packets according to the interface standards such as iSCSI.

Background Art

A device for transferring data in data blocks in a certain size is called a block device. The block device includes an interface in accordance with SCSI or ATAPI. A disk device for writing and reading data into and from a rotating recording medium is typical of the block device. Writing and reading of data are performed by the disk device in data blocks in a size equal to the integral multiple of the size of a sector. The sector size is the size of a sector on the recording medium. The size of a data block can be expressed by the number of sectors or the number of packets.

As the disk device, a hard disk drive and an optical disk drive have been known. For example, the sector sizes of a DVD and Blu-ray Disc (registered trademark) are 2048 bytes, and the sector size of a magnetic disk is 512 bytes. For example, a Blu-ray Disc (registered trademark) drive writes and reads data in error collection code (ECC) units in a size of 32 sectors, that is, 65536 bytes (64 KB), and transmits and receives data to and from another device.

The disk device generally records, for example, a MPEG-2 transport stream (hereinafter, will be referred to as a MPEG-2TS) in data blocks into a recording medium based on the file system of a File Allocation Table (FAT) or Universal Disk Format (UDF), the size of the data block being equal to the integral multiple of the sector size of the recording medium. The MPEG-2TS is one of the systems for transmitting compressed video signals and audio signals and is adopted for satellite digital broadcast and terrestrial digital broadcast in Japan and the West. In the MPEG-2TS, video and audio data of broadcast programs are time-division multiplexed in MPEG-2TS packets with a fixed length of 188 bytes.

In recent years, the iSCSI (internet SCSI) has appeared as the interface standard of the block device (e.g., see Patent Literature 1). The iSCSI is designed for transferring SCSI commands and data between devices using TCP/IP packets. The SCSI commands and data are contained in the transmission frames of the TCP/IP packets. For example, if an interface in accordance with the iSCSI is provided in the block device and a host computer, the block device and the host computer can be connected to each other via a network.

When data is transferred between the disk device and the host computer using the interface in accordance with the iSCSI, the number of packets allocated for one sector has to be calculated every time data is transferred. This is because the user data size of the TCP/IP packet is variable but has no affinity with the sector size of a recording medium. In other words, the user data size of TCP/IP packet and the sector size are not in an integral ratio. For example, the sector size of Blu-ray Disc (registered trademark) is 2048 bytes, and the maximum user data size of an Ethernet (registered trademark) packet defined by IPv4 of TCP/IP is 1412 bytes. Thus the sector size of Blu-ray Disc (registered trademark) is not divisible by the maximum user data size of the Ethernet (registered trademark) packet, so that fractions occur.

Meanwhile, the MPEG-2TS packet with the above-described fixed length of 188 bytes has no affinity with the sector size of a recording medium. Thus for the purpose of efficiently writing and reading a MPEG-2TS into and from a recording medium, proposed is a method for transferring data in a data size equal to the least common multiple of the size of a packet and the size of a sector (e.g., see Patent Literatures 2, 3, and 4).

Similarly, proposed is a method for transferring data in a data size equal to the least common multiple of the sector size of a transfer source and the sector size of a transfer destination, when the sector size of the transfer source has no affinity with the sector size of the transfer destination (e.g., see Patent Literature 5).

Citation List

Patent Literature

Patent Literature 1: Japanese Patent Application Laid-Open No. 2002-318725
Patent Literature 2: Japanese Patent Application Laid-Open No. 2004-110876
Patent Literature 3: Japanese Patent No. 4310821
Patent Literature 4: Japanese Patent Application Laid-Open No. 8-289248
Patent Literature 5: Japanese Patent Application Laid-Open No. 2006-018426

Summary of Invention

Technical Problem

As described above, when data is transferred according to the iSCSI, the user data size of a TCP/IP packet and the sector size of a recording medium are not in an integral ratio, so that the number of packets allocated for one sector has to be calculated every time data is transferred. For this reason, the data transfer rate decreases by the calculation. Further, as described above, the sector size is not divisible by the user data size, so that fractions occur. Thus, packets containing data with the fractions have to be transferred, thereby decreasing the data transfer rate with an increase in the number of packets. Moreover, according to the iSCSI, negotiation has to be performed every time one packet is transferred, thereby decreasing the data transfer rate by the negotiation. Furthermore, since the data transfer rate decreases, rotational latency may occur in the block device.

The following will describe the decrease in the data transfer rate (throughput) due to rotational latency, by way of an example in which packets is transferred sector by sector from the block device through the network to the host computer. In order to achieve the function of an interface, for example, a network card and its driver meeting the iSCSI may be provided in the block device and the host computer. Here, the size of one sector (sector size) is 2048 bytes, and the maximum user data size of one packet is 1412 bytes.

First, a READ command for one sector is sent to the interface of the block device from the host computer through the network. The interface of the block device having received the READ command issues the READ command for one sector to the main controller of the block device. The block device reads data for one sector from the recording medium in response to the issued READ command and transfers the read data to the interface of the block device.

The interface of the block device sends the transferred data for one sector in packets to the network. In this case, the data for one sector is divided into two packets, and the packets are transferred to the host computer. At this point, the number of packets allocated for one sector is calculated. Further, a packet containing data with fractions is transferred. Moreover, negotiation is performed every time one packet is transferred. During this period, the recording medium continues rotating.

Next, from the host computer having received the two packets, the READ command for one sector is sent to the interface of the block device through the network. The interface of the block device having received the READ command issues the READ command for one sector to the main controller of the block device. At this point, in the case where the data retrieving unit of the block device has passed by a part or all of a sector, the data for which will be read next, rotational latency for about one rotation occurs. The data retrieving unit is an optical pick up when the block device is an optical disk drive, and the data retrieving unit is a reproducing head when the block device is a hard disk drive.

As described above, in order that multiple data required by the host computer is sequentially read from the recording medium, it is necessary to sequentially access sectors in which the data required by the host computer is stored. Thus, rotational latency may occur in the block device, decreasing the data transfer rate (throughput).

Even if the above-described method for transferring data in the data size equal to the least common multiple of the packet size and the sector size is applied to data transfer according to the iSCSI, the data transfer rate is not increased. For example, when the sector size is 2048 bytes and the maximum user data size of one packet is 1412 bytes, the data size equal to the least common multiple of these sizes is 722944 bytes. Thus, the size of a data block transferred between the recording medium and the interface of the block device is 353 sectors, and the size of a data block transferred between the interface of the block device and the host computer is 512 packets. Since the sizes of the data blocks are too large, the size of data required by the host computer may be smaller than the data size of 353 sectors in some cases. In these cases, in order that the number of packets to be transferred from the block device to the host computer is 512, it is necessary to transfer packets containing dummy data in addition to the required data. The number of packets increases by such packets containing redundant dummy data, thereby decreasing the data transfer rate. Further, according to the iSCSI, negotiation has to be performed every time one packet is transferred as described above. Thus, negotiation has to be performed for the packets containing redundant dummy data, thereby decreasing the data transfer rate.

Actually, the data size required by the host computer to the disk device at a time is limited. For example, in the case where the host computer includes a highly functional operating system (OS) such as MS-DOS and Windows (registered trademarks of Microsoft), the maximum data size required by the host computer to the disk device at a time is 128 KB. Meanwhile, as described above, when the sector size is 2048 bytes and the maximum user data size of one packet is 1412 bytes, the data size equal to the least common multiple of these sizes is 722944 bytes, larger than the maximum data size required by the host computer at a time. Thus, the application of the data transferring method using the least common multiple is not practical.

As described above, by the typical data transferring method in which data is transferred in data blocks using packets, data is not efficiently transferred, rotational latency occurs, and thus the data transfer rate (throughput) may decrease.

In view of the above problems, an object of the present invention is to provide a data transferring method by which the data transfer rate is increased.

Solution to Problem

The data transferring method according to the present invention is a method for transferring data between a first device and a second device. In the data transferring method, the first device includes a first interface for transmitting and receiving, to and from a rotating recording medium, data in data blocks in a size equal to the integral multiple of the sector size of the recording medium and for transmitting and receiving, to and from the second device, the data transferred from or to the recording medium in packets. Further, the second device includes a second interface that is connected to the first interface and transmits and receives data in packets to and from the first device. In the data transfer between the first device and the second device, data is transferred in the integral ratio of sectors to packets set such that the number of packets is smaller than the number of packets required for data transfer for one sector.

In the data transferring method according to the present invention, the first device or the first interface may include a buffer for temporarily storing data to be transferred. In the case where the first device or the first interface includes the buffer, a relationship may be fixed between a position on the buffer for temporarily storing data in sectors forming a group read in the integral ratio from the recording medium and a position on the buffer predetermined for packets forming a group transferred in the integral ratio.

In the data transferring method according to the present invention, the data block may be comparable in size to the sectors of the integral ratio.

In the data transferring method according to the present invention, when the size of the data block is predetermined, a value by which the number of sectors indicating the size of the data block is divisible is preferably used as the number of sectors of the integral ratio.

In the data transferring method according to the present invention, the integral ratio may be stored beforehand in the first device and the second device.

In the data transferring method according to the present invention, the integral ratio may be stored beforehand in the first device, and integral ratios of sectors to packets may be stored beforehand in the second device, the integral ratios being determined depending on the type of the recording medium and set such that the number of packets is smaller than the number of packets required for data transfer for one sector. In this case, before transferring data between the first device and the second device, one of the integral ratios determined depending on the type of the recording medium is preferably selected according to the type of the recording medium on the first device by the second device.

In the data transferring method according to the present invention, integral ratios of sectors to packets may be stored beforehand in the first device and the second device, the integral ratios being determined depending on the type of the recording medium and set such that the number of packets is smaller than the number of packets required for data transfer for one sector. In this case, before transferring data between the first device and the second device, one of the integral ratios determined depending on the type of the recording medium is preferably selected according to the type of the recording medium on the first device by the first and second devices.

In the data transferring method according to the present invention, in the case where the sector size of the recording medium on the first device is N, the reference sector size is n, and the reference integral ratio of the reference number of sectors x to the reference number of packets y is x : y, the reference integral ratio being set such that the number of packets is smaller than the number of packets required for transferring data in the reference sector size n, before transferring data between the first device and the second device, the integral ratio may be calculated from a formula of $(n / N) \times x : y$ by at least one of the first device and the second device.

The data transferring method according to the present invention may include: a recognition step of recognizing the sector size of the recording medium on the first device and the user data size of the packet; a ratio calculation step of increasing the number of packets sequentially from one or allocating prime numbers to the numbers of packets, and multiplying the number of packets by the user data size to obtain a unit size, and calculating the ratio of the obtained unit size to the sector size; a determination value calculation step of subtracting rounded values obtained by rounding the ratios from the ratios to obtain determination values; a determination value search step of searching for the smallest determination value among the determination values; and an integral ratio calculation step of setting the rounded value corresponding to the determination value searched for in the determination value search step as the number of sectors, and setting the ratio of the number of sectors to the number of packets corresponding to the determination value searched for in the determination value search step as the integral ratio.

In the data transferring method including the recognition step, the ratio calculation step, the determination value calculation step, the determination value search step, and the integral ratio calculation step, when the size of the data block is predetermined, the data transferring method may further include a rounded value search step of searching for rounded values by which the number of sectors indicating the size of the data block is divisible among the rounded values obtained by rounding the ratios, and in the determination value search step, the smallest determination value may be searched for among the determination values corresponding to the rounded values searched for in the rounded value search step.

Advantageous Effects of Invention

According to preferred embodiments of the present invention, data is transferred in the integral ratio of sectors to packets set such that the number of packets is smaller than the number of packets required for data transfer for one sector, so that data can be transferred efficiently, and the data transfer rate can be increased. Further, a relationship is fixed between a position on the buffer for temporarily storing data in sectors forming a group read in the integral ratio from the recording medium and a position on the buffer predetermined for packets forming a group transferred in the integral ratio. This eliminates the need to read and store data sequentially from sectors on the recording medium. Thus, even if rotational latency occurs, data transfer can be achieved with high efficiency, and the rotational latency can be substantially reduced, so that the data transfer rate can be increased.

Brief Description of Drawings

[FIG. 1] FIG. 1 schematically shows a configuration example of a system achieving a data transferring method according to embodiments of the present invention.
[FIG. 2] FIG. 2 is a general conceptual diagram of the iSCSI.
[FIG. 3] FIG. 3 shows the general composition of an Ethernet (registered trademark) packet.
[FIG. 4] FIG. 4 is a schematic diagram for explaining the sector size of a recording medium on a block device according to embodiments of the present invention.
[FIG. 5] FIG. 5 is an explanatory drawing showing an example of a data transferring method according to the first embodiment of the present invention.
[FIG. 6] FIG. 6 is an explanatory drawing showing an example of a data transferring method according to a second embodiment of the present invention.
[FIG. 7] FIG. 7 is an explanatory drawing showing the relationship between the average rate of data transfer between the block device and a network and the rotation rate of the recording medium.
[FIG. 8] FIG. 8 is an explanatory drawing showing an example of a data transferring method according to a third embodiment of the present invention.
[FIG. 9] FIG. 9 shows an example of steps of calculating an integral ratio according to a fourth embodiment of the present invention.
[FIG. 10] FIG. 10 shows another example of steps of calculating an integral ratio according to the fourth embodiment of the present invention.

Description of Embodiments

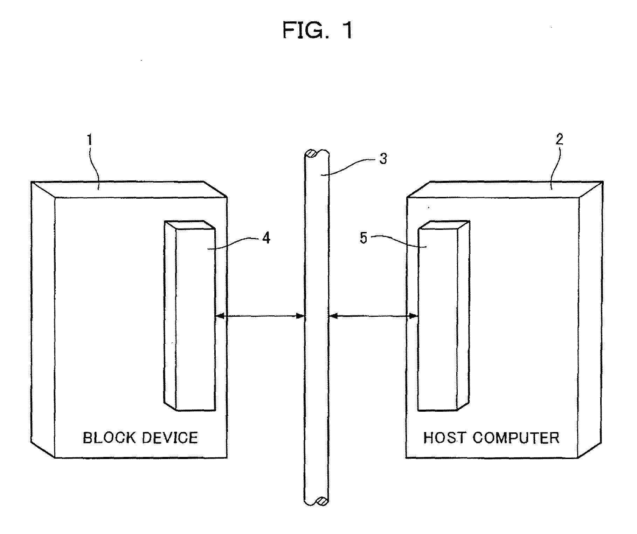

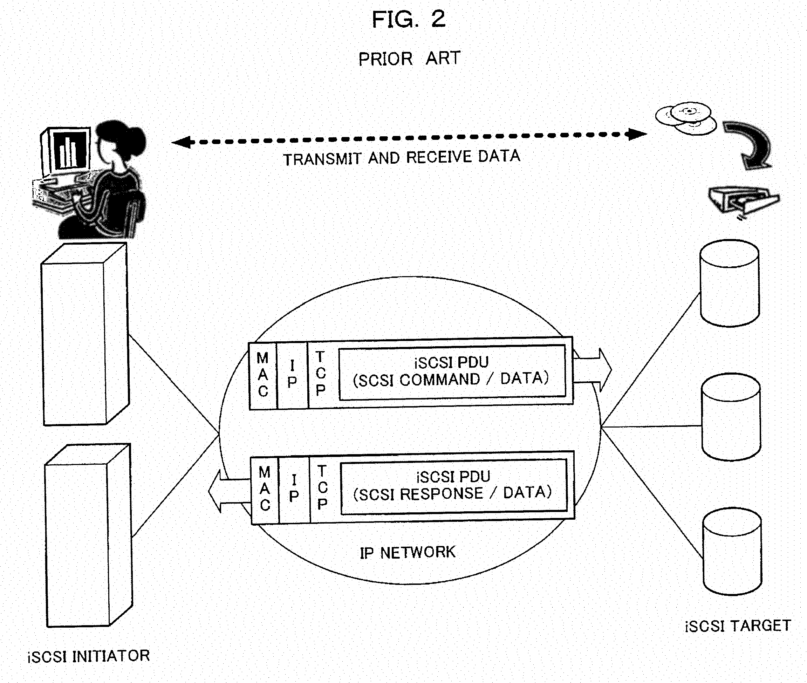

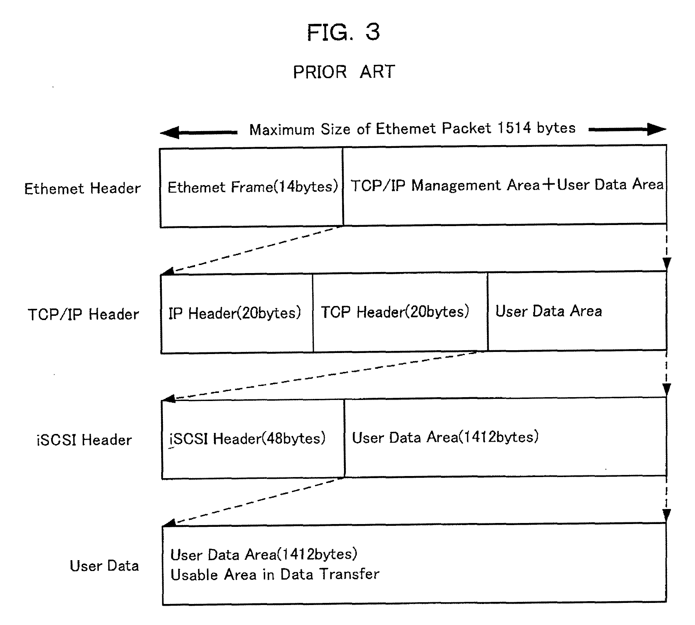

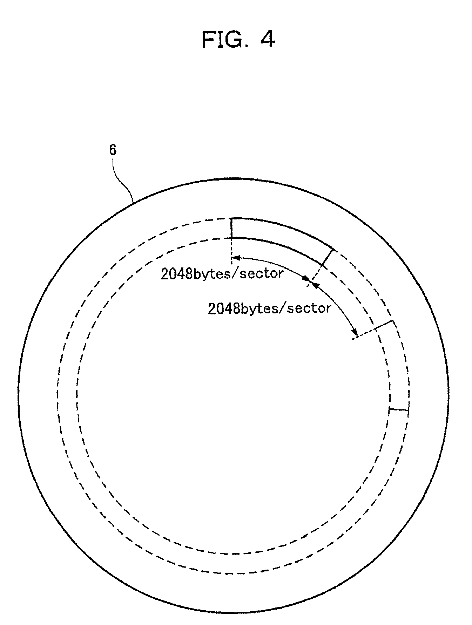

First, the following will describe a basic mode shared by the after-mentioned embodiments. FIG. 1 schematically shows a configuration example of a system achieving a data transferring method according to the embodiments. In each embodiment, a first device is a block device 1, a second device is a host computer 2, and the block device 1 and the host computer 2 are connected to each other via a network 3.
The block device 1 is a disk device for writing and reading data on a rotating recording medium (not shown). Writing and reading of data are performed in data blocks in a size equal to the integral multiple of the sector size. The block device 1 includes a first interface 4. The first interface 4 transmits and receives data in data blocks to and from the rotating recording medium. Further, the first interface 4 transmits and receives, to and from the host computer 2, in packets, data transferred from the recording medium or data to be transferred to the recording medium.
The host computer 2 includes a second interface 5 connected to the first interface 4 via the network 3. The second interface 5 transmits and receives data in packets to and from the first interface 4. The host computer 2 also issues a READ command or a WRITE command to the block device 1 sequentially.
In order to achieve such a function of the interface of packet data communication in data blocks, for example, a network interface card that meets the iSCSI and its driver may be installed in the block device 1 and the host computer 2. According to the iSCSI, the block device 1 is an iSCSI target and the host computer 2 is an iSCSI initiator. FIG. 2 is a conceptual diagram of the iSCSI.
In each embodiment, Ethernet (registered trademark) packets defined by IPv4 of TCP/IP are transferred between the block device 1 and the host computer 2. FIG. 3 shows the composition of the Ethernet (registered trademark) packet. The maximum size and the maximum user data size of the Ethernet (registered trademark) packet are 1514 bytes and 1412 bytes, respectively. According to the iSCSI, the commands and data of the SCSI are contained in the transmission frame of a TCP/IP packet. Further, in each embodiment, as shown in FIG. 4, a recording medium 6 with a size of one sector (sector size) of 2048 bytes is illustrated. Needless to say, the maximum user data size of one packet and the sector size of the recording medium 6 are not limited to 1412 bytes and 2048 bytes, respectively.

(First Embodiment)

A data transferring method according to a first embodiment of the present invention will be described in accordance with the accompanying drawing. The same configurations as the above-described will not be described below.

In the case where the maximum user data size of one packet is 1412 bytes and the sector size of the recording medium 6 is 2048 bytes, the number of packets required for data transfer for one sector is two. In the present embodiment, the integral ratio of sectors and packets expressed as "sectors : packets = 2 : 3" has been stored in the block device 1 and the host computer 2, the integral ratio being set such that the number of packets is smaller than the number of packets required for data transfer for one sector. Data for two sectors is transferred in three packets in the integral ratio between the block device 1 and the host computer 2. Thus, the data block size corresponds to the number of sectors of the above-described integral ratio (two sectors).

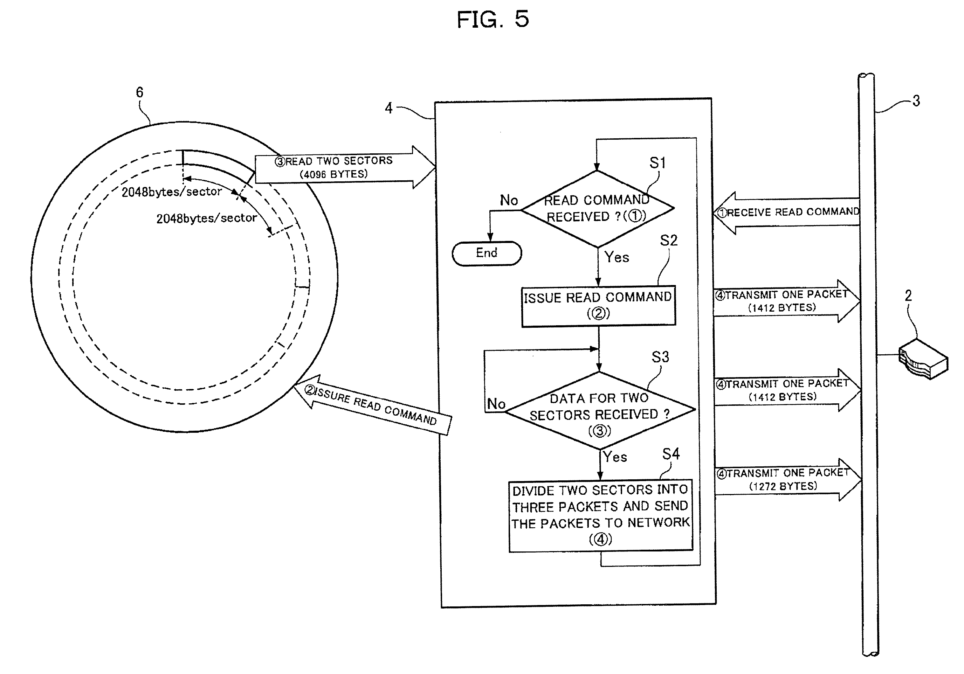

FIG. 5 is an explanatory drawing showing an example of the data transferring method according to the first embodiment of the present invention. The same elements as the above-described are indicated by the same reference numerals. FIG. 5 specifically shows that data is read in two sectors from the recording medium 6, the read data (data block) is divided into three packets, and the packets are sent to the network 3. FIG. 5 also shows the processing flow of the interface 4 of the block device 1.

First, a READ command for two sectors is sent from the host computer 2 through the network 3 to the interface 4 of the block device 1 (step S1). The interface 4 having received the READ command issues the READ command for two sectors to the main controller (not shown) of the block device 1 (step S2).

The block device 1 reads, in response to the READ command, data for two sectors (2048 × 2 = 4096 bytes) from the recording medium 6 and transfers the read data to the interface 4 (step S3).

The interface 4 divides the transferred data for two sectors into three packets and sends the packets to the network 3 (step S4). The sizes of the transferred data contained in the three packets are 1412 bytes, 1412 bytes, and 1272 bytes. Negotiation is performed for each packet transmission. During this period, the recording medium 6 continues rotating.

Since the integral ratio of sectors to packets of 2 : 3 has been stored in the block device 1 and the host computer 2 in the data transferring method according to the first embodiment, calculation is not required for determining the number of packets allocated for one sector. Further, since data for two sectors is transferred in three packets, the data transfer time for one packet can be reduced as compared to the case where data is transferred sector by sector. In other words, when data is transferred sector by sector, two packets are required for transferring data for one sector. Specifically, since the sector size is 2048 bytes, a packet of 1412 bytes and a packet of 636 bytes are created. Thus, in the case where data is transferred sector by sector, four packets are required for transferring data for two sectors. In contrast, when data is transferred in the above-described integral ratio of 2 : 3, one packet containing fractional data is allocated for each data for two sectors. Thus, the data transfer time for one packet can be reduced. Further, since data for two sectors is transferred, the time required for transferring the data from the recording medium 6 to the first interface 4 is twice longer than the time required for transferring data sector by sector. Thus, the occurrence of rotational latency is suppressed.

As described above, since only one packet containing fractional data is created for data for two sectors, the total number of packets containing fractional data is smaller than that in the case where data is transferred sector by sector. Thus, the total number of TCP/IP packets to be transferred is reduced, so that the data transfer efficiency is improved.

As described above, the integral ratio of "sectors : packets = 2 : 3" set such that the number of packets is smaller than the number of packets required for data transfer for one sector is stored beforehand in the block device 1 and the host computer 2, so that data can be transferred between the block device 1 and the host computer 2 in a shorter time. In addition, the occurrence of rotational latency can be suppressed.

Further, the sector size is predetermined depending on the type of the recording medium. Thus, the integral ratios of sectors to packets for the respective types of the recording medium may be stored beforehand in the host computer 2, and the interface 5 of the host computer 2 may transfer data in the integral ratio selected according to the type of the recording medium on the block device 1.

Moreover, in the case where the block device 1 is compatible with multiple types of recording media, the integral ratios of sectors to packets for the respective types of the recording media may be stored beforehand also in the block device 1, and the interface 4 of the block device 1 and the interface 5 of the host computer 2 may transfer data in the integral ratio selected according to the type of the recording medium on the block device 1.

In the present embodiment, the integral ratios stored beforehand are used. Using the reference integral ratio of the reference number of sectors to the reference number of packets set such that the number of packets is smaller than the number of packets required for transferring data in the reference sector size, the integral ratio according to the sector size of the recording medium on the block device 1 may be calculated from the following formula (1) :

$$(n/N) \times x : y \quad \cdots \quad (1)$$

wherein "N" is the sector size (bytes) of the recording medium on the block device 1, "n" is the reference sector size (bytes), "x" is the reference number of sectors, and "y" is the reference number of packets.

For example, when the reference sector size n is 2048 bytes, the reference number of sectors x is 2, the reference number of packets y is 3, and when the block device 1 is a magnetic disk device, the sector size N of the magnetic disk is 512 bytes. Thus, the integral ratio is expressed as follows:

$$(2048/512) \times 2 : 3 = 8 : 3$$

The calculation using the formula (1) may be performed before the start of data transfer. The calculation may be performed by the block device 1 and/or the host computer 2. Further, instead of the calculation using the formula (1) before the start of data transfer, the integral ratio calculated using the formula (1) may be used as the integral ratio to be stored beforehand.

(Second Embodiment)

The following will describe a data transferring method according to a second embodiment of the present invention in accordance with the accompanying drawing. The same configurations as the above-described will not be described below.

In the data transferring method according to the second embodiment, a data block size is predetermined. The integral ratio of sectors to packets set such that the number of packets is smaller than the number of packets required for data transfer for one sector is an integral ratio set such that the number of sectors indicating the data block size is divisible by the number of sectors of the integral ratio.

In the second embodiment, the data block size is 32 sectors, that is, 65536 bytes (64 KB), the integral ratio of "sectors : packets = 2 : 3" has been stored in the block device 1 and the host computer 2, and data for 32 sectors is transferred in 48 packets in the integral ratio between the block device 1 and the host computer 2. In the case where data in such a large size is collectively transferred, a cache buffer (temporary storage area) has to be provided in the block device 1. In the present embodiment, the interface 4 of the block device 1 is provided with a cache buffer. Further, in the case where 64 KB of data is collectively transferred, the cache buffer preferably has storage capacity equal to the integral multiple of 64 KB.

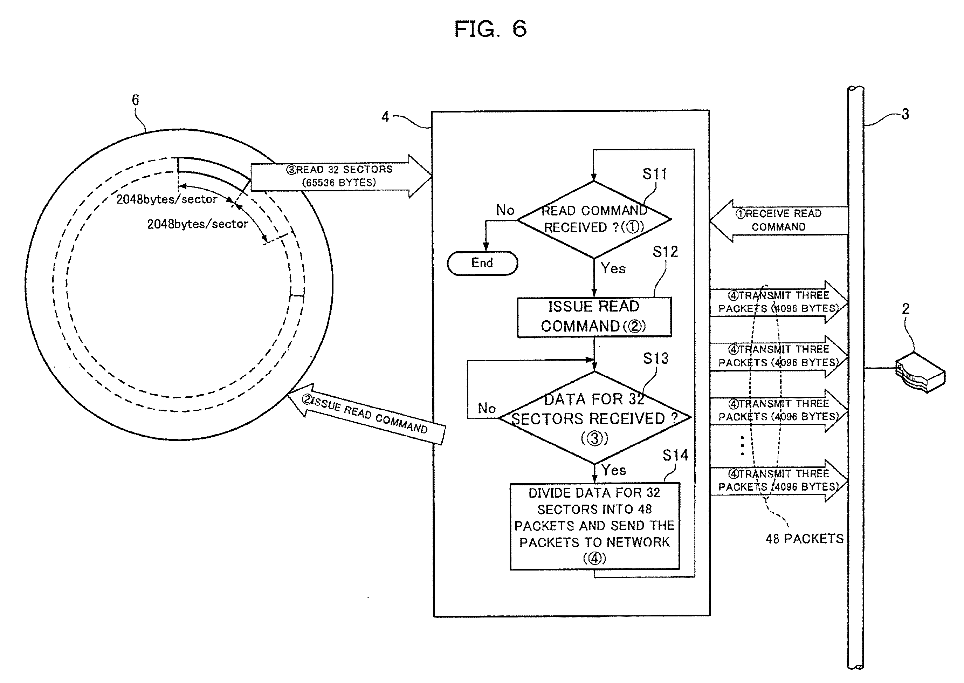

FIG. 6 is an explanatory diagram showing an example of the data transferring method according to the second embodiment of the present invention. The same elements as the above-described are indicated by the same reference numerals. FIG. 6 specifically shows that data is read in 32 sectors from the recording medium 6, the read data (data block) is divided into 48 packets, and the packets are sent to the network 3. FIG. 6 also shows the processing flow of the interface 4 of the block device 1.

First, a READ command for 32 sectors is sent from the host computer 2 through the network 3 to the interface 4 of the block device 1 (step S11). The interface 4 having received the READ command issues the READ command for 32 sectors to the main controller (not shown) of the block device 1 (step S12).

The block device 1 reads data for 32 sectors from the recording medium 6 in response to the READ command, and transfers the read data to the interface 4.

The data for 32 sectors transferred from the recording medium 6 is temporarily stored in the cache buffer (not shown) of the interface 4 (step S13). The interface 4 divides the data for 32 sectors stored in the cache buffer into 48 packets and sends the packets to the network 3 (step S14). At this point, since the integral ratio of sectors and packets is "2 : 3", three packets are allocated for data for two sectors (4096 bytes). The sizes of the transferred data contained in the three packets are 1412 bytes, 1412 bytes, and 1272 bytes, respectively. Further, negotiation is performed for each packet transmission. During this period, the recording medium 6 continues rotating.

In the data transferring method according to the second embodiment, since the integral ratio of sectors to packets of 2 : 3 has been stored in the block device 1 and the host computer 2, calculation is not required for determining the number of packets allocated for one sector. Further, since data for two sectors is transferred in three packets, the data transfer time for 16 packets can be reduced as compared to the case where data is transferred sector by sector. In other words, when data is transferred sector by sector, two packets are required for transferring data for one sector. Thus, when data is transferred sector by sector, 64 packets are required for transferring data for 32 sectors. In contrast, when data is transferred in the integral ratio of 2 : 3, one packet containing fractional data is allocated for data for two sectors, so that 48 packets are required for transferring data for 32 sectors. Thus it is possible to reduce the data transfer time for 16 packets. Moreover, since data is transferred in 32 sectors, the time required for data transfer from the recording medium 6 to the first interface 4 is 32 times longer than that for data transfer sector by sector. Thus, the occurrence of the rotational latency is suppressed.

As described above, since only one packet containing fractional data is created for data for two sectors, the total number of packets containing fractional data is smaller than that in the case where data is transferred sector by sector. Thus, the total number of TCP/IP packets to be transferred is reduced, so that the data transfer efficiency is improved.

As described above, even when the data block size is predetermined, the integral ratio of sectors to packets set such that the number of packets is smaller than the number of packets required for data transfer for one sector is an integral ratio such that the number of sectors indicating the data block size is divisible by the number of sectors of the integral ratio. Thus data can be transferred between the block device 1 and the host computer 2 in a shorter time. In addition, the occurrence of rotational latency can be suppressed.

In the present embodiment, the interface 4 of the block device 1 is provided with the cache buffer (temporary storage area). In the case where the body of the block device 1 (for example, the disk device body) is provided with the cache buffer, the cache buffer of the body of the block device 1 may be used.

As described in the first embodiment, the integral ratios for the respective types of the recording medium may be stored beforehand in the host computer 2 or in the host computer 2 and the block device 1. However, the number of sectors of the integral ratio has to be a value by which the number of sectors indicating the data block size is divisible.

As described in the first embodiment, the integral ratio may be calculated using the formula (1) by the block device 1 and/or the host computer 2. Alternatively, the integral ratio to be stored beforehand may be the integral ratio calculated from the formula (1). However, the number of sectors of the integral ratio has to be a value by which the number of sectors indicating the data block size is divisible.

(Third Embodiment)

The following will describe a data transferring method according to a third embodiment of the present invention in accordance with the accompanying drawings. The same configurations as the above-described will not be described below.

In the third embodiment, the size of a data block is four sectors, that is, 8192 bytes (2048 $\times$ 4), the integral ratio of "sectors : packets = 2 : 3" has been stored in the block device 1 and the host computer 2, and data for four sectors is transferred in six packets in the integral ratio between the block device 1 and the host computer 2. Thus, similarly to the second embodiment, the block device 1 has to be provided with a cache buffer (temporary storage area). In the present embodiment, the interface 4 of the block device 1 is provided with a cache buffer. Further, in the case where 8192 bytes of data is collectively transferred, the cache buffer preferably has storage capacity equal to the integral multiple of 8192 bytes.

Moreover, in the third embodiment, the recording medium 6 rotates at double speed. When the recording medium 6 rotates at double speed, data is read for every other sector from the recording medium 6.

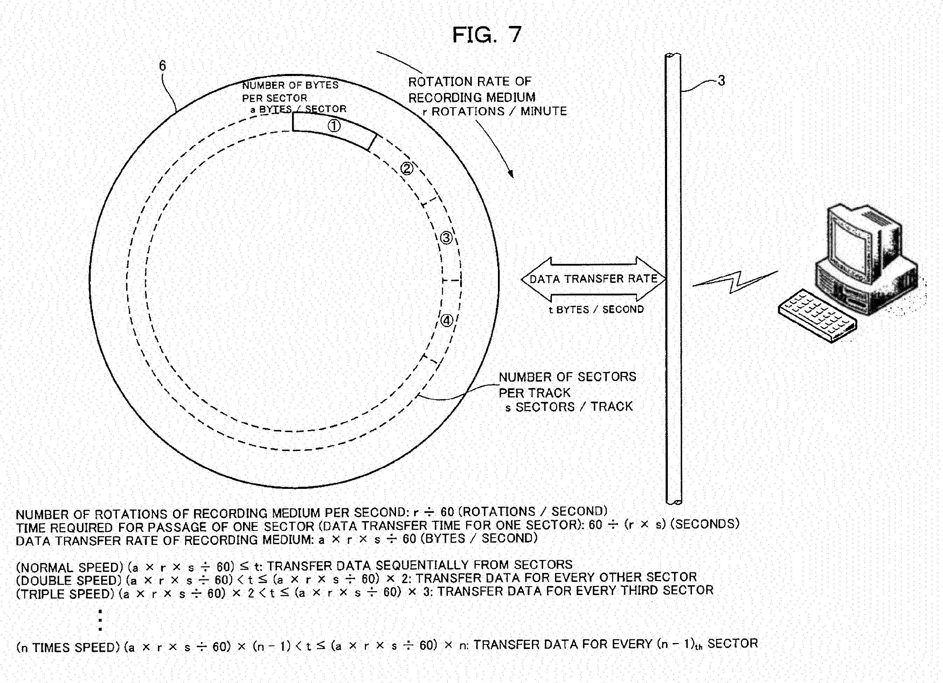

The following will describe the relationship between the average rate of data transfer between the block device 1 and the network 3 and the rotation rate of the recording medium 6. As shown in FIG. 7, the sector size of the recording medium 6 is a [bytes/sector], the number of sectors per one track of the recording medium 6 is s [sectors/track], the rotation rate of the recording medium 6 is r [rotations/minute], and the average rate of data transfer between the block device 1 and the network 3 is t [bytes/second].

In this case, the number of rotations of the recording medium 6 in one second is r / 60 [rotations/second], and a time required for the passage of one sector (data transfer time for one sector) is 60 / (r $\times$ s) [seconds]. Thus, the data transfer rate of the recording medium 6 is (a $\times$ r $\times$ s) / 60 [bytes/second].

When the data transfer rate of the recording medium 6 is not faster than the average rate t of data transfer between the block device 1 and the network 3, data is read sequentially sector by sector on the recording medium 6. Meanwhile, when the recording medium 6 rotates at n times speed and the data transfer rate of the recording medium 6 exceeds the average rate t of data transfer between the block device 1 and the network 3, data is read for every $(n-1)_{th}$ sector.

In the data transferring method according to the third embodiment, a storage area is predetermined on the cache buffer for storing the user data of packets from a group of the packets transferred in the integral ratio of sectors to packets. Further, the positional relationship is fixed between the predetermined storage area on the cache buffer for the packets and a storage area on the cache buffer for storing sectors from a group of the sectors read in the integral ratio of sectors to packets from the recording medium 6. Such a feature is achieved since the integral ratio of sectors to packets is predetermined and the number of packets allocated for one sector and the sizes of transferred data contained in the packets are determined in the integral ratio.

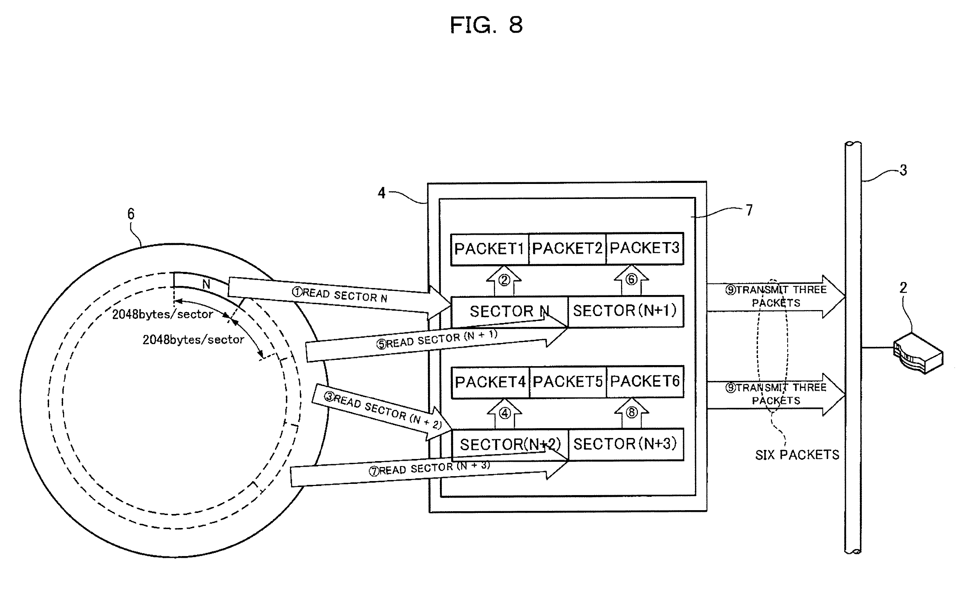

FIG. 8 is an explanatory drawing showing an example of the data transferring method according to the third embodiment of the present invention. The same elements as the above-described are indicated by the same reference numerals. FIG. 8 specifically shows that data is read in four sectors from the recording medium 6, the read data (data block) is divided into six packets, and the packets are sent to the network 3.

First, a READ command for four sectors is sent from the host computer 2 through the network 3 to the interface 4 of the block device 1. The interface 4 having received the READ command issues the READ command for four sectors to the main controller (not shown) of the block device 1.

The block device 1 reads, in response to the READ command, data for four sectors from the recording medium 6 and transfers the read data to the interface 4. At this point, data for a sector N is read from the recording medium 6. The first read data for the sector N is temporarily stored in a predetermined storage area on a cache buffer 7. For example, in the case where the data for the sector N and data for a sector (N + 1) next to the sector N are divided into three packets 1, 2, and 3, the data for the sector N and the sector (N + 1) is temporarily stored in predefined storage areas on the cache buffer 7 for the packets 1, 2, and 3. Further, since the sizes of the transferred data contained in the three packets, 1, 2, and 3 are 1412 bytes, 1412 bytes, and 1272 bytes, respectively, the data for the sector N is stored in the storage area (1412 bytes) for the packet 1 and a part of the storage area (1412 bytes) for the packet 2.

In the third embodiment, as described above, the recording medium 6 rotates at double speed, and data is read for every other sector. Thus, after the data for the sector N is read, data for a sector (N + 2) is read.

The data for the sector (N + 2) is temporarily stored in a predetermined storage area on the cache buffer 7, similarly to the sector N. For example, in the case where the data for the sector (N + 2) and data for a sector (N + 3) next to the sector (N + 2) are divided into three packets 4, 5, and 6, the data for the sector (N + 2) is stored in a storage area (1412 bytes) for the packet 4 and a part of a storage area (1412 bytes) for the packet 5.

Subsequently, after the recording medium 6 makes about one rotation, the other data for the sector (N + 1) and the sector (N + 3) is read. In the third embodiment, the data for the sectors N and (N + 2) is read from the recording medium 6, and the read data is stored in the cache buffer 7, during which the recording medium 6 continues rotating. Thus, substantial rotational latency is reduced as compared to the case where data is read sequentially sector by sector.

Storage areas on the cache buffer 7, in which the other data for the sectors (N + 1) and (N + 3) is temporarily stored, are continuous with the storage areas in which the data for the sectors N and (N + 2) is stored.

In other words, the data for the sector (N + 1) is stored in a part of the storage area for the packet 2, in which the data for the sector N is not stored, and the storage area (1272 bytes) for the packet 3.

Similarly, the data for the sector (N + 3) is stored in a part of the storage area for the packet 5, in which the data for the sector (N + 2) is not stored, and the storage area (1272 bytes) for the packet 6.

After the data for four sectors requested from the host computer 2 is temporarily stored in the cache buffer 7 of the interface 4, the interface 4 divides the data in the cache buffer 7 into six packets and sends the packets to the network 3.

As described above, in the third embodiment, positions on the cache buffer 7, in which data for sectors forming a group read from the recording medium 6 in the integral ratio of sectors to packets is temporarily stored, respectively correspond to positions on the cache buffer 7 predetermined for packets forming a group transferred to the host computer 2 in the integral ratio. Thus, read data can be sequentially stored on the cache buffer without the need of storing data on the cache buffer sector by sector. This makes it possible to reduce the substantial rotational latency even when the rotation rate of the recording medium 6 increases.

In the present embodiment, the interface 4 of the block device 1 is provided with the cache buffer (temporary storage area). In the case where the body of the block device 1 (for example, the disk device body) is provided with a cache buffer, the cache buffer of the body of the block device 1 may be used.

As described in the first embodiment, integral ratios for the respective types of the recording medium may be stored beforehand in the host computer 2 or in the host computer 2 and the block device 1.

As described in the first embodiment, the integral ratio may be calculated using the formula (1) by the block device 1 and/or the host computer 2. Alternatively, the integral ratio calculated using the formula (1) may be used as the integral ratio to be stored beforehand.

(Fourth Embodiment)

The following will describe a data transferring method according to a fourth embodiment of the present invention in accordance with the accompanying drawings. The same configurations as the above-described will not be described below.

The fourth embodiment is different from the first embodiment in the calculation of the integral ratio of sectors to packets set such that the number of packets is smaller than the number of packets required for data transfer for one sector. The data transferring method after the calculation of the integral ratio in the fourth embodiment is the same as that in the first embodiment, and an explanation thereof is omitted.

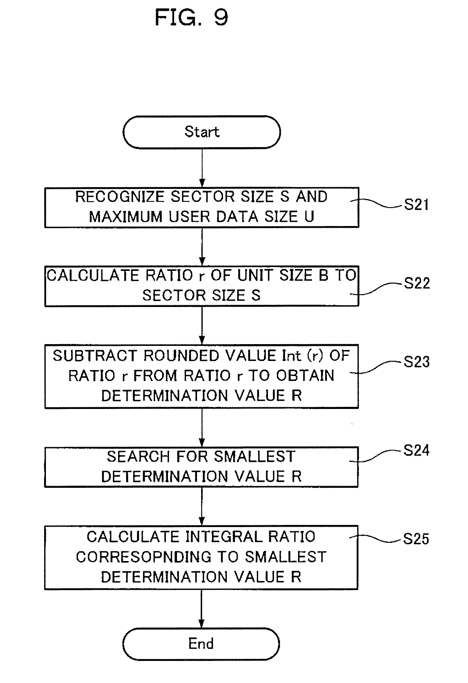

FIG. 9 shows an example of steps of calculating the integral ratio according to the fourth embodiment of the present invention. First, in step S21, a recognition step is performed in which a sector size S (2048 bytes) of the recording medium 6 on the block device 1 and a maximum user data size U (1412 bytes) of one packet are recognized.

Next, in step S22, a ratio calculation step is performed in which the number of packets (number of transferred packet units) p is multiplied by the maximum user data size U to obtain a unit size B (p), the number of packets p being increased sequentially from one, and a ratio r (p) of the obtained unit size B (p) to the sector size S is calculated. The formulae of calculating the unit size B (p) and the ratio r (p) are as follows:

$$B~(p)~=~p~\times~U~=~p~\times~1412$$

$$r~(p)~=~B~(p)~/~S~=~p~\times~U/S~=~p~\times~1412~/~2048$$

wherein p is {1, 2, 3, ⋯, n}, and n is set such that B (n) does not exceed the storage capacity of the cache buffer provided in the body or interface of the block device.

Next, in step S23, a determination value calculation step is performed in which a rounded value Int {r (p)} obtained by rounding the ratio r (p) calculated in the ratio calculation step is subtracted from the ratio r (p) to obtain a determination value R (p). The determination value R (p) is calculated from the following formula:

$$R~(p)~=~r~(p)~-~Int~\{r~(p)\}$$

Next, in step S24, a determination value search step is performed in which a determination value R (minimum) being the smallest is searched for among the determination values R (p) calculated in the determination value calculation step.

$$R~(minimum)~=~MIN~\{R~(1),~R~(2),~R~(3),~\cdots,~R~(n)\}$$

Next, in step S25, an integral ratio calculation step is performed in which the rounded value corresponding to the determination value R (minimum) searched for in the determination value search step is set as the number of sectors, and the integral ratio of the number of sectors to the number of transferred packet units corresponding to the determination value R (minimum) searched for in the determination value search step is calculated.

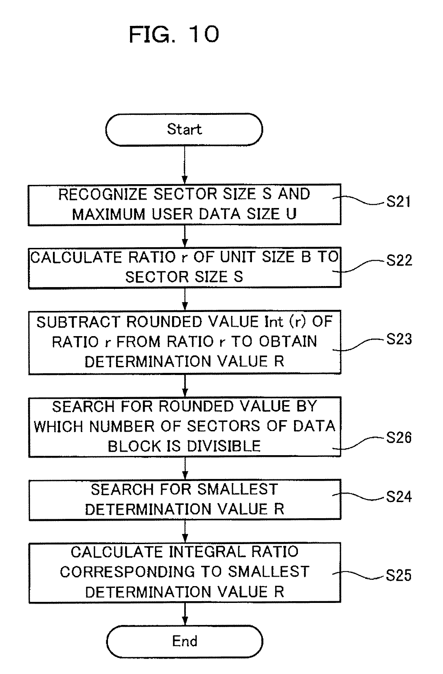

The following will describe another example of the calculating method of the integral ratio. FIG. 10 shows another example of steps of calculating an integral ratio according to the fourth embodiment of the present invention. The same steps as the above-described steps of calculating the integral ratio are indicated by the same step numbers, and an explanation thereof is omitted.

In the case where data is transferred in the integral ratio calculated in the above-described steps, the data block is comparable in size to the sectors of the calculated integral ratio. Meanwhile, in the case where the data block size is predetermined, the number of sectors of the integral ratio has to be a value by which the number of sectors indicating the data block size is divisible. FIG. 10 shows the steps of calculating an integral ratio of which the number of sectors is a value by which the number of sectors indicating the size of a data block is divisible.

The steps of calculating the integral ratio in FIG. 10 are different from those in FIG. 9 in that, after step S23 of the determination value calculation step, in step S26, a rounded value search step is performed in which values by which the number of sectors indicating the size of a data block is divisible are searched for among rounded values Int {r (p)} obtained by rounding ratios r (p), and in step S24 of the determination value search step, a determination value R (minimum) being the smallest is searched for among determination values corresponding to the rounded values searched for in the rounded value search step. Further, the rounded value search step may be performed between step S22 of the ratio calculation step and step S23 of the determination value calculation step.

In the case where the size of a data block is predetermined in this way, rounded values by which the number of sectors indicating the data block size is divisible are searched for and a determination value being the smallest is searched for among determination values corresponding to the searched rounded values, so that an integral ratio can be calculated, of which the number of sectors is a value by which the number of sectors indicating the data block size is divisible. For example, when the recording medium is Blu-ray Disc (registered trademark), the data block size is 32 sectors, and thus the rounded values searched for in the rounded value search step, that is, the numbers of sectors are {1, 2, 4, 8, 16}.

The above-described steps of calculating an integral ratio may be performed before the start of data transfer. The calculation may be performed by the block device 1 and the host computer 2. Alternatively, the calculation may be performed by the block device 1 or the host computer 2 and the integral ratio may be stored in one of the devices. Further, instead of the steps of calculating an integral ratio before the start of data transfer, an integral ratio obtained in the steps of calculating an integral ratio may be stored beforehand.

In step S22 of the ratio calculation step in the above-described two calculating steps, the number of packets p is increased sequentially from one but prime numbers may be allocated to the numbers of packets p. Thus, the number of calculations for searching for the minimum determination value can be reduced as compared to the case where the number of packets p is increased sequentially from one.

Industrial Applicability

The data transferring method according to the present invention can increase the data transfer rate in transferring data in data blocks using packets, and is useful for the iSCSI interface and the like.

## Claims

1. A data transferring method in which data is transferred between a first device and a second device,
the first device comprising a first interface for transmitting and receiving, to and from a rotating recording medium, data in data blocks in a size equal to an integral multiple of a sector size of the recording medium and for transmitting and receiving, to and from the second device, the data transferred from or to the recording medium in packets, and the second device comprising a second interface that is connected to the first interface and transmits and receives data in packets to and from the first device,
wherein, in the data transfer between the first device and the second device, data is transferred in an integral ratio of sectors to packets set such that the number of packets is smaller than the number of packets required for data transfer for one sector.

2. The data transferring method according to claim 1, wherein
the first device or the first interface includes a buffer for temporarily storing data to be transferred, and
a relationship is fixed between a position on the buffer for temporarily storing data in sectors forming a group read in the integral ratio from the recording medium and a position on the buffer predetermined for packets forming a group transferred in the integral ratio.

3. The data transferring method according to claim 1 or 2, wherein the data block is comparable in size to the sectors of the integral ratio.

4. The data transferring method according to claim 1 or 2, wherein the size of the data block is predetermined, and a value by which the number of sectors indicating the size of the data block is divisible is used as the number of sectors of the integral ratio.

5. The data transferring method according to any one of claims 1 to 4, wherein the integral ratio is stored beforehand in the first device and the second device.

6. The data transferring method according to any one of claims 1 to 4, wherein
the integral ratio is stored beforehand in the first device, and integral ratios of sectors to packets are stored beforehand in the second device, the integral ratios being determined depending on a type of the recording medium and set such that the number of packets is smaller than the number of packets required for data transfer for one sector, and before transferring data between the first device and the second device, one of the integral ratios determined depending on the type of the recording medium is selected according to a type of the recording medium on the first device by the second device.

7. The data transferring method according to any one of claims 1 to 4, wherein integral ratios of sectors to packets are stored beforehand in the first device and the second device, the integral ratios being determined depending on a type of the recording medium and set such that the number of packets is smaller than the number of packets required for data transfer for one sector, and
before transferring data between the first device and the second device, one of the integral ratios determined depending on the type of the recording medium is selected according to a type of the recording medium on the first device by the first and second devices.

8. The data transferring method according to any one of claims 1 to 4, wherein
in the case where the sector size of the recording medium on the first device is N, a reference sector size is n, and a reference integral ratio of the reference number of sectors x to the reference number of packets y is x : y, the reference integral ratio being set such that the number of packets is smaller than the number of packets required for transferring data in the reference sector size n,
before transferring data between the first device and the second device, the integral ratio is calculated from a formula of (n / N) $\times$ x : y by at least one of the first device and the second device.

9. The data transferring method according to any one of claims 1 to 3, comprising:

a recognition step of recognizing the sector size of the recording medium on the first device and a user data size of the packet;
a ratio calculation step of increasing the number of packets sequentially from one or allocating prime numbers to the numbers of packets, and multiplying the number of packets by the user data size to obtain a unit size, and calculating a ratio of the obtained unit size to the sector size;
a determination value calculation step of subtracting rounded values obtained by rounding the ratios from the ratios to obtain determination values;
a determination value search step of searching for the smallest determination value among the determination values; and
an integral ratio calculation step of setting the rounded value corresponding to the determination value searched for in the determination value search step as the number of sectors, and setting a ratio of the number of sectors to the number of packets corresponding to the determination value searched for in the determination value search step as the integral ratio.

10. The data transferring method according to claim 9, wherein
the size of the data block is predetermined,
the data transferring method further comprises a rounded value search step of searching for rounded values by which the number of sectors indicating the size of the data block is divisible among the rounded values obtained by rounding the ratios, and
in the determination value search step, the smallest determination value is searched for among the determination values corresponding to the rounded values searched for in the rounded value search step.

FIG. 1

EP 2 416 235 A1

# FIG. 2

## PRIOR ART

TRANSMIT AND RECEIVE DATA

| MAC | IP | TCP | iSCSI PDU (SCSI COMMAND / DATA) |

| MAC | IP | TCP | iSCSI PDU (SCSI RESPONSE / DATA) |

IP NETWORK

iSCSI INITIATOR

iSCSI TARGET

EP 2 416 235 A1

## FIG. 3

### PRIOR ART

Maximum Size of Ethemet Packet 1514 bytes

| | | |
|---|---|---|
| Ethemet Header | Ethemet Frame(14bytes) | TCP/IP Management Area+User Data Area |

| | | | |
|---|---|---|---|
| TCP/IP Header | IP Header(20bytes) | TCP Header(20bytes) | User Data Area |

| | | |
|---|---|---|
| iSCSI Header | iSCSI Header(48bytes) | User Data Area(1412bytes) |

| | |
|---|---|
| User Data | User Data Area(1412bytes)<br>Usable Area in Data Transfer |

EP 2 416 235 A1

FIG. 4

2048bytes/sector

2048bytes/sector

6

EP 2 416 235 A1

# FIG. 5

③READ TWO SECTORS
(4096 BYTES)

2048bytes/sector

2048bytes/sector

②ISSURE READ COMMAND

**4**

S1

No ⟶ READ COMMAND
RECEIVED ?(①)

End

Yes

S2

ISSUE READ COMMAND
(②)

S3

No ⟶ DATA FOR TWO
SECTORS RECEIVED ?
(③)

Yes

S4

DIVIDE TWO SECTORS INTO
THREE PACKETS AND SEND
THE PACKETS TO NETWORK
(④)

①RECEIVE READ COMMAND

④TRANSMIT ONE PACKET
(1412 BYTES)

④TRANSMIT ONE PACKET
(1412 BYTES)

④TRANSMIT ONE PACKET
(1272 BYTES)

**6**

**3**

**2**

EP 2 416 235 A1

FIG. 6

6

4

3

③READ 32 SECTORS
(65536 BYTES)

2048bytes/sector

2048bytes/sector

②ISSUE READ COMMAND

S11

No ◁ READ COMMAND
RECEIVED ?(①)

End

Yes

S12

ISSUE READ
COMMAND(②)

S13

No ◁ DATA FOR 32
SECTORS RECEIVED ?
(③)

Yes

S14

DIVIDE DATA FOR 32
SECTORS INTO 48
PACKETS AND SEND THE
PACKETS TO NETWORK
(④)

①RECEIVE READ
COMMAND

④TRANSMIT THREE
PACKETS (4096 BYTES)

④TRANSMIT THREE
PACKETS (4096 BYTES)

④TRANSMIT THREE
PACKETS (4096 BYTES)

④TRANSMIT THREE
PACKETS (4096 BYTES)

48 PACKETS

2

EP 2 416 235 A1

## FIG. 7

NUMBER OF BYTES PER SECTOR
a BYTES / SECTOR

ROTATION RATE OF RECORDING MEDIUM
r ROTATIONS / MINUTE

DATA TRANSFER RATE
t BYTES / SECOND

NUMBER OF SECTORS PER TRACK
s SECTORS / TRACK

NUMBER OF ROTATIONS OF RECORDING MEDIUM PER SECOND: $r \div 60$ (ROTATIONS / SECOND)
TIME REQUIRED FOR PASSAGE OF ONE SECTOR (DATA TRANSFER TIME FOR ONE SECTOR): $60 \div (r \times s)$ (SECONDS)
DATA TRANSFER RATE OF RECORDING MEDIUM: $a \times r \times s \div 60$ (BYTES / SECOND)

(NORMAL SPEED) $(a \times r \times s \div 60) \leq t$: TRANSFER DATA SEQUENTIALLY FROM SECTORS
(DOUBLE SPEED) $(a \times r \times s \div 60) < t \leq (a \times r \times s \div 60) \times 2$: TRANSFER DATA FOR EVERY OTHER SECTOR
(TRIPLE SPEED) $(a \times r \times s \div 60) \times 2 < t \leq (a \times r \times s \div 60) \times 3$: TRANSFER DATA FOR EVERY THIRD SECTOR

⋮

(n TIMES SPEED) $(a \times r \times s \div 60) \times (n-1) < t \leq (a \times r \times s \div 60) \times n$: TRANSFER DATA FOR EVERY $(n-1)_{th}$ SECTOR

EP 2 416 235 A1

FIG. 8

EP 2 416 235 A1

## FIG. 9

```
            ┌──────────┐
            │  Start   │
            └────┬─────┘
                 │
  ┌──────────────▼──────────────┐
  │  RECOGNIZE SECTOR SIZE S AND │─── S21
  │  MAXIMUM USER DATA SIZE U    │
  └──────────────┬──────────────┘
                 │
  ┌──────────────▼──────────────┐
  │ CALCULATE RATIO r OF UNIT    │─── S22
  │ SIZE B TO SECTOR SIZE S      │
  └──────────────┬──────────────┘
                 │
  ┌──────────────▼──────────────┐
  │ SUBTRACT ROUNDED VALUE Int(r)│
  │ OF RATIO r FROM RATIO r TO   │─── S23
  │ OBTAIN DETERMINATION VALUE R │
  └──────────────┬──────────────┘
                 │
  ┌──────────────▼──────────────┐
  │ SEARCH FOR SMALLEST          │─── S24
  │ DETERMINATION VALUE R        │
  └──────────────┬──────────────┘
                 │
  ┌──────────────▼──────────────┐
  │ CALCULATE INTEGRAL RATIO     │
  │ CORRESOPNDING TO SMALLEST    │─── S25
  │ DETERMINATION VALUE R        │
  └──────────────┬──────────────┘
                 │
            ┌────▼─────┐
            │   End    │
            └──────────┘
```

EP 2 416 235 A1

# FIG. 10

```
                    ┌──────────┐
                    │  Start   │
                    └──────────┘
                          │
                          ▼
        ┌───────────────────────────────────┐
        │ RECOGNIZE SECTOR SIZE S AND        │────S21
        │ MAXIMUM USER DATA SIZE U           │
        └───────────────────────────────────┘
                          │
                          ▼
        ┌───────────────────────────────────┐
        │ CALCULATE RATIO r OF UNIT SIZE B TO│────S22
        │ SECTOR SIZE S                      │
        └───────────────────────────────────┘
                          │
                          ▼
        ┌───────────────────────────────────┐
        │ SUBTRACT ROUNDED VALUE Int (r) OF  │
        │ RATIO r FROM RATIO r TO OBTAIN     │────S23
        │ DETERMINATION VALUE R              │
        └───────────────────────────────────┘
                          │
                          ▼
        ┌───────────────────────────────────┐
        │ SEARCH FOR ROUNDED VALUE BY        │
        │ WHICH NUMBER OF SECTORS OF DATA    │────S26
        │ BLOCK IS DIVISIBLE                 │
        └───────────────────────────────────┘
                          │
                          ▼
        ┌───────────────────────────────────┐
        │ SEARCH FOR SMALLEST                │────S24
        │ DETERMINATION VALUE R              │
        └───────────────────────────────────┘
                          │
                          ▼
        ┌───────────────────────────────────┐
        │ CALCULATE INTEGRAL RATIO           │
        │ CORRESPONDING TO SMALLEST          │────S25
        │ DETERMINATION VALUE R              │
        └───────────────────────────────────┘
                          │
                          ▼
                    ┌──────────┐
                    │   End    │
                    └──────────┘
```

EP 2 416 235 A1

<table>
<tr><td colspan="2" align="center">**INTERNATIONAL SEARCH REPORT**</td><td>International application No.<br>PCT/JP2010/002344</td></tr>
</table>

A. CLASSIFICATION OF SUBJECT MATTER
*G06F3/06*(2006.01)i

According to International Patent Classification (IPC) or to both national classification and IPC

B. FIELDS SEARCHED

Minimum documentation searched (classification system followed by classification symbols)
G06F3/06

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2001-167528 A (Sony Corp.),<br>22 June 2001 (22.06.2001),<br>abstract<br>& US 2005/0265700 A1    & US 7106946 B1<br>& US 2006/0291815 A1    & EP 1089571 A3 | 1-7<br>8-10 |

☐ Further documents are listed in the continuation of Box C.    ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| | |
|---|---|
| Date of the actual completion of the international search<br>   20 May, 2010 (20.05.10) | Date of mailing of the international search report<br>   01 June, 2010 (01.06.10) |
| Name and mailing address of the ISA/<br>   Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002318725 A
- JP 2004110876 A
- JP 4310821 B

- JP 8289248 A
- JP 2006018426 A